# EUROPÄISCHE PATENTSCHRIFT

(11) **EP 0 474 972 B1**
(45) Veröffentlichungstag und Bekanntmachung des Hinweises auf die Patenterteilung: **10.11.1993**
(21) Anmeldenummer: 91108646.0
(22) Anmeldetag: 28.05.1991
(51) Int. Cl.: B01J 35/06, B01J 25/00, B01J 23/40

(54) **Verfahren zur Herstellung eines Katalysator-Netzes, danach hergestelltes Katalysator-Netz und seine Verwendung**
Catalytic net preparation process, the catalytic net and use thereof
Procédé de préparation d'un réseau catalytique, réseau catalytique ainsi produit et son utilisation

(30) Priorität: 12.09.1990 DE 4028916
(43) Veröffentlichungstag der Anmeldung: 18.03.1992
(73) Patentinhaber: W.C. Heraeus GmbH, D-63450 Hanau (DE)
(72) Erfinder: Hörmann, Michael, Dr., W-8752 Mömbris (DE); Kotowski, Stefan, Dr., W-6456 Seligenstadt (DE); Lupton, David Francis, Dr., W-6468 Gelnhausen (DE); Werner, Reiss, W-6480 Hanau (DE); Schölz, Friedhold, W-6458 Rodenbach 1 (DE); Streb, Bruno, Dr., W-6463 Freigericht 1 (DE); Viel, Antje, W-6460 Gelnhausen (DE)
(74) Vertreter: Kühn, Hans-Christian

(56) Entgegenhaltungen:
- EP-A- 0 364 153
- DE-A- 2 829 035
- FR-A- 2 523 476
- US-A- 4 154 705

## Beschreibung

Die Erfindung betrifft ein Verfahren zur Herstellung eines aus Draht gewebten Katalysator-Netzes aus den Edelmetall-Legierungen Platin/Rhodium oder Platin/Rhodium/Palladium mit vergrößerter Oberfläche, danach hergestelltes Katalysator-Netz und seine Verwendung.

Für die Ammoniak-Oxidation zur Herstellung von Salpetersäure sind Katalysatoren aus Legierungen des Platins mit Rhodium und gegebenenfalls Palladium, besonders Pt90Rh10 und Pt90Rh5Pd5, in Form gewebter Netze, üblicherweise mit 1024 Maschen pro cm² und einer Drahtdicke von 0,06 mm oder 0,076 mm, in Gebrauch (Ullmanns Encyklopädie der technischen Chemie Band 20, 4. Auflage 1981, 309). Katalysatoren ähnlicher Art werden auch bei der Ammoxidation von Methan zu Blausäure eingesetzt.

Aus EP-A1-259 966 sind Katalysator-Netze für die Ammoniak-Oxidation bekannt, die oberflächenreiche Überzüge aus Platin aufweisen und Oberflächen von über 50 cm²/g besitzen. In Gegenwart dieser Katalysator-Netze erfolgt die Ammoniak-Oxidation bei niedrigerer Temperatur und ist die Zündung der Reaktion durch eine Wasserstoff-Flamme schon unterhalb von 75°C möglich. Sie werden vorzugsweise durch Aufbringen von Mischungen aus thermisch zersetzbaren Platinverbindungen und flüchtigen Lösungsmitteln auf die fertigen Netze und thermische Zersetzung der Platinverbindungen hergestellt.

Ausgehend von diesem Stand der Technik, stellt sich die Aufgabe der Erfindung, ein Verfahren zur Herstellung eines aus Draht gewebten Katalysator-Netzes aus den Edelmetall-Legierungen Platin/Rhodium oder Platin/Rhodium/Palladium mit vergrößerter Oberfläche zu finden, das nicht den zusätzlichen Einsatz thermisch zersetzbarer Platinverbindungen oder anderer Platinquellen zur Erzeugung der vergrößerten Oberfläche erfordert.

Das die Lösung der Aufgabe darstellende Verfahren ist erfindungsgemäß gekennzeichnet durch Überziehen des Drahtes mit einem Unedelmetall aus der Gruppe Kupfer, Nickel oder Kupfer und Nickel, Diffusionsglühen des überzogenen Drahtes unter Bildung einer Edelmetall-Unedelmetall-Mischkristallzone, Lösen des Unedelmetalls und Verweben des so erhaltenen Drahtes.

Besonders bewährt hat sich das Verfahren, wenn die Dicke des Unedelmetall-Überzugs zwischen 0,3 Mikrometer und 1 Millimeter liegt und wenn das Diffusionsglühen bei einer Temperatur zwischen 750°C und dem Schmelzpunkt des Unedelmetalls, vorzugsweise in einem Durchlaufofen und unter Schutzgas, wie Stickstoff oder Argon, erfolgt.

Die Dauer des Diffusionsglühens hängt von der Glühtemperatur und dem Diffusionskoeffizienten des Unedelmetalls ab und ist vorzugsweise so zu wählen, daß, ausgehend von der Grenzfläche Edelmetall-Legierung/Unedelmetall, 1 - 30 % des ursprünglichen Drahtdurchmessers in die Edelmetall-Unedelmetall-Mischkristallzone umgewandelt werden. Besonders bewährt hat sich das erfindungsgemäße Verfahren, wenn etwa 3 % des ursprünglichen Drahtdurchmessers in die Edelmetall-Unedelmetall-Mischkristallzone umgewandelt werden.

Um die mechanische Festigkeit des Drahtes beziehungsweise des daraus gewebten Netzes zu erhöhen, hat es sich bewährt, den Draht im Anschluß an das Diffusionsglühen herunterzuziehen, vorzugsweise um mindestens ein Drittel seines Durchmessers. Ist dieser Verfahrensschritt vorgesehen, so sollte der Durchmesser des als Ausgangsmaterial für das erfindungsgemäße Verfahren benutzten Drahtes im Bereich von 0,1 - 0,5 Millimeter liegen. Andernfalls wird ein Draht mit einem Durchmesser im Bereich von 0,05 - 0,1 Millimeter gewählt.

Das Überziehen des Drahtes mit dem Unedelmetall kann nach jedem bekannten Metallisierungsverfahren, das zu einer gleichmäßigen Bedeckung des Drahtes mit dem Unedelmetall in der gewünschten Dicke führt, erfolgen, zum Beispiel durch Tauchen, Spritzen, Aufdampfen, Kathodenzerstäubung, Flammspritzen, Plattieren oder galvanische oder stromlose Abscheidung. Für das erfindungsgemäße Verfahren hat sich die galvanische Abscheidung des Unedelmetall-Überzugs besonders bewährt. Die Kupfer-Überzüge lassen sich beispielsweise aus cyanidischen Kupfer-Elektrolyten, die Nickel-Überzüge aus Nickelsulfat/Nickelchlorid-Elektrolyten abscheiden.

Das sich an das Diffusionsglühen oder an das Drahtziehen anschließende Lösen des Unedelmetalls kann zum Beispiel auf elektrolytischem Wege geschehen. Für das erfindungsgemäße Verfahren wird jedoch die Behandlung mit einer entsprechend dem herauszulösenden Unedelmetall ausgewählten Ätzlösung, die das Edelmetall - Platin, Rhodium und gegebenenfalls Palladium - nicht angreifen darf, bevorzugt.

Das Weben des Netzes kann so erfolgen, daß sowohl Kette als auch Schuß aus dem Draht mit der vergrößerten Oberfläche bestehen. Es ist aber auch möglich, als Kette oder Schuß einen herkömmlichen Draht zu wählen.

Bei dem erfindungsgemäßen Verfahren erfolgt die Bildung der vergrößerten Oberfläche aus dem Draht heraus, so daß anders als bei dem bekannten Verfahren keine zusätzliche Edelmetall-Quelle benötigt wird. Außerdem besteht bei keinem der Verfahrensschritte die Gefahr der Oberflächenverkleinerung durch Wärmeeinwirkung, zum Beispiel eines Sinterns des Edelmetalls, da das Ätzen als der eigentliche Schritt der Oberflächenbildung bei weit unterhalb der Temperaturen erfolgt, bei denen das Edelmetall sintert.

Ein weiterer besonderer Vorteil des Verfahrens ist es, daß die zu der Oberflächenvergrößerung führenden Verfahrensschritte leicht und ohne großen personellen und apparativen Aufwand in herkömmliche Verfahren der Fertigung von Katalysator-Netzen zu integrieren sind.

Das nach dem erfindungsgemäßen Verfahren hergestellte Katalysator-Netz zeichnet sich durch eine gleichmäßige, um mindestens den Faktor 100 vergrößerte Oberfläche und eine korallenartige Struktur der vergrößerten Oberfläche aus. Einer um den Faktor 100 vergrößerten Oberfläche entspricht zum Beispiel bei einem Pt90Rh10-Draht mit einem Durchmesser von 60 Mikrometer beziehungsweise einem daraus gewebten Netz eine spezifische Oberfläche von über 3000 cm²/g. Die vergrößerte Oberfläche besitzt eine sehr gute mechanische Stabilität, da sie - anders als der oberflächenreiche Platin-Überzug der bekannten Katalysator-Netze - einen integralen Bestandteil des Drahtes beziehungsweise des Netzes bildet. Unter einer einen integralen Bestandteil des Drahtes bildenden vergrößerten Oberfläche wird im Sinne der Erfindung eine vergrößerte Oberfläche aus bereits in dem noch keine vergrößerte Oberfläche aufweisenden Draht vorhandenem Material verstanden.

Das Netz eignet sich zur Katalyse der Ammoniak-Oxidation und der Ammoxidation von Methan.

Zur näheren Erläuterung wird in dem folgenden Beispiel die Herstellung eines Katalysator-Netzes nach dem Verfahren gemäß der Erfindung beschrieben.

### Beispiel

Ein aus Pt90Rh10 bestehender, gereinigter Draht mit einem Durchmesser von 0,12 mm durchläuft mit einer Geschwindigkeit von 1,5 Minuten pro Meter dreimal einen cyanidischen Kupfer-Elektrolyten (Heraeus cyanidisches Glanzkupferbad CU 786). Die Kupfer-Abscheidung erfolgt bei Raumtemperatur mit einer Stromdichte von 2 A/dm² unter Verwendung von zwei Kupfer-Anoden. Nach dreimaligem Durchlaufen des Bades hat sich auf dem Draht ein etwa 0,75 Mikrometer dicker Überzug aus Kupfer abgeschieden. Der überzogene Draht wird anschließend mit destilliertem Wasser gespült. Dann wird der Draht in einem Durchlaufofen bei 950°C unter Argon geglüht (Durchlaufgeschwindigkeit 10 m/min, Verweilzeit etwa 3 s) und nach dem Verlassen des Durchlaufofens und Abkühlen in 6 Schritten auf einen Durchmesser von 0,06 Millimeter heruntergezogen. Anschließend wird der Draht durch eine Ätzlösung aus
3000 ml destilliertem Wasser
300 g Ammoniumperoxodisulfat und
300 ml Salzsäure, Dichte 1,19
gezogen und danach sofort mit destilliertem Wasser gewaschen und aufgespult. Die Drahtspule wird dann nochmals für etwa 15 Minuten in einem Ultraschallbad mit destilliertem Wasser gewaschen. Der Draht wird anschließend in bekannter Weise zu einem Netz verwebt.

Die Ermittlung der Oberfläche des so hergestellten Netzes erfolgt mit Hilfe der cyclischen Voltammetrie. Danach besitzt das nach dem erfindungsgemäßen Verfahren hergestellte Netz - verglichen mit einem Netz aus unbehandeltem Draht - eine um mehr als den Faktor 300 vergrößerte Oberfläche. Rasterelektronenmikroskopische Aufnahmen zeigen die korallenartige Struktur der Oberfläche.

## Patentansprüche

1. Verfahren zur Herstellung eines aus Draht gewebten Katalysator-Netzes aus den Edelmetall-Legierungen Platin/Rhodium oder Platin/Rhodium/Palladium mit vergrößerter Oberfläche, gekennzeichnet durch Überziehen des Drahtes mit einem Unedelmetall aus der Gruppe Kupfer, Nickel oder Kupfer und Nickel, Diffusionsglühen des überzogenen Drahtes unter Bildung einer Edelmetall-Unedelmetall-Mischkristallzone, Lösen des Unedelmetalls und Verweben des so erhaltenen Drahtes.

2. Verfahren nach Anspruch 1, dadurch gekennzeichnet, daß die Dicke des Unedelmetall-Überzugs zwischen 0,3 Mikrometer und 1 Millimeter liegt.

3. Verfahren nach Anspruch 1 oder 2, dadurch gekennzeichnet, daß das Diffusionsglühen bei einer Temperatur zwischen 750°C und dem Schmelzpunkt des Unedelmetalls erfolgt.

4. Verfahren nach einem der Ansprüche 1 bis 3, dadurch gekennzeichnet, daß das Diffusionsglühen so lange erfolgt, bis, ausgehend von der Grenzfläche Edelmetall-Legierung/Unedelmetall, 1 - 30 % des ursprünglichen Drahtdurchmessers in die Edelmetall-Unedelmetall-Mischkristallzone umgewandelt sind.

5. Verfahren nach Anspruch 4, dadurch gekennzeichnet, daß das Diffusionsglühen so lange erfolgt, bis, ausgehend von der Grenzfläche Edelmetall-Legierung/Unedelmetall, etwa 3 % des ursprünglichen Drahtdurchmessers in die Edelmetall-Unedelmetall-Mischkristallzone umgewandelt sind.

6. Verfahren nach einem der Ansprüche 1 bis 5, dadurch gekennzeichnet, daß das Diffusionsglühen in einem Durchlaufofen erfolgt.

7. Verfahren nach einem der Ansprüche 1 bis 6, dadurch gekennzeichnet, daß das Diffusionsglühen unter Schutzgas erfolgt.

8. Verfahren nach einem der Ansprüche 1 bis 7, dadurch gekennzeichnet, daß der Durchmesser des zu überziehenden Drahtes im Bereich von 0,05 - 0,1 Millimeter liegt.

9. Verfahren nach einem der Ansprüche 1 bis 7, dadurch gekennzeichnet, daß der Durchmesser des zu überziehenden Drahtes im Bereich von 0,1 - 0,5 Millimeter liegt.

10. Verfahren nach Anspruch 9, dadurch gekennzeichnet, daß der Durchmesser des Drahtes nach dem Diffusionsglühen durch Ziehen vermindert wird.

11. Verfahren nach einem der Ansprüche 1 bis 10, dadurch gekennzeichnet, daß der Unedelmetall-Uberzug galvanisch abgeschieden wird.

12. Verfahren nach einem der Ansprüche 1 bis 11, dadurch gekennzeichnet, daß das Lösen des Unedelmetalls mit einer Ätzlösung erfolgt.

13. Katalysator-Netz, erhältlich nach dem Verfahren nach einem der Ansprüche 1 bis 12, gekennzeichnet durch eine - bezogen auf die ursprüngliche Oberfläche des Drahtes - vergrößerte Oberfläche, die einen integralen Bestandteil des Netz-Drahtes bildet.

14. Verwendung des Katalysator-Netzes nach Anspruch 13 für die Oxidation von Ammoniak.

15. Verwendung des Katalysator-Netzes nach Anspruch 13 für die Ammoxidation von Methan.

## Claims

1. A method of producing a catalyst netting, woven from wire, from the precious-metal alloys platinum/rhodium or platinum/rhodium/palladium having an enlarged surface, characterised by coating the wire with a base metal from the group of copper, nickel or copper and nickel, diffusion annealing of the coated wire along with the formation of a precious-metal/base-metal mixed-crystal zone, dissolving of the base metal and interweaving of the wire obtained in this way.

2. A method according to claim 1, characterised in that the thickness of the base-metal coating lies between 0.3 micrometres and 1 millimetre.

3. A method according to claim 1 or 2, characterised in that the diffusion annealing is effected at a temperature of between 750°C and the melting point of the base metal.

4. A method according to any one of claims 1 to 3, characterised in that the diffusion annealing is effected until, starting from the precious-metal-alloy/base-metal interface, 1% to 30% of the original wire diameter is converted into the precious-metal/base-metal mixed-crystal zone.

5. A method according to claim 4, characterised in that the diffusion annealing is effected until, starting from the precious-metal-alloy/base-metal interface, approximately 3% of the original wire diameter is converted into the precious-metal/base-metal mixed crystal zone.

6. A method according to any one of claims 1 to 5, characterised in that the diffusion annealing is effected in a continuous furnace.

7. A method according to any one of claims 1 to 6, characterised in that the diffusion annealing is effected in a protective atmosphere.

8. A method according to any one of claims 1 to 7, characterised in that the diameter of the wire that is to be coated lies in the range of 0.05 to 0.1 millimetres.

9. A method according to any one of claims 1 to 7, characterised in that the diameter of the wire that is to be coated lies in the range of 0.1 to 0.5 millimetres.

10. A method according to claim 9, characterised in that the diameter of the wire is reduced by drawing after the diffusion annealing.

11. A method according to any one of claims 1 to 10, characterised in that the base-metal coating is electro-deposited.

12. A method according to any one of claims 1 to 11, characterised in that the dissolving of the base metal is effected with a corrosive solution.

13. A catalyst netting, obtained according to the method according to any one of claims 1 to 12, characterised by an enlarged surface - related to the original surface of the wire - which forms an integral constituent of the netting wire.

14. Use of the catalyst netting according to claim 13 for the oxidation of ammonia.

15. Use of the catalyst netting according to claim 13 for the ammoxidation of methane.

## Revendications

1. Procédé de fabrication d'un treillis catalyseur tissé en fil métallique, en alliages de métaux nobles platine/rhodium ou platine/rhodium/palladium à surface agrandie, caractérisé par le revêtement du fil métallique au moyen d'un métal commun du groupe cuivre, nickel ou cuivre et nickel, le recuit d'homogénéisation du fil revêtu avec formation d'une zone de solution solide métaux nobles-métal commun, la séparation du métal commun et le tissage du fil métallique ainsi obtenu.

2. Procédé selon la revendication 1, caractérisé en ce que l'épaisseur du revêtement en métal commun est comprise entre 0,3 µm et 1 mm.

3. Procédé selon la revendication 1 ou 2, caractérisé en ce que le recuit d'homogénéisation est opéré à une température comprise entre 750°C et le point de fusion du métal commun.

4. Procédé selon l'une des revendications 1 à 3, caractérisé en ce que le recuit d'homogénéisation est poursuivi jusqu'à ce que 1 à 30 % du diamètre originel du fil métallique, à partir de l'interface alliage de métaux nobles-métal commun, soient transformés en zone de solution solide métaux nobles-métal commun.

5. Procédé selon la revendication 4, caractérisé en ce que le recuit d'homogénéisation est poursuivi jusqu'à ce qu'environ 3 % du diamètre originel du fil métallique, à partir de l'interface alliage de métaux nobles/métal commun soient transformés en zone de solution solide métaux nobles-métal commun.

6. Procédé selon l'une des revendications 1 à 5, caractérisé en ce que le recuit d'homogénéisation est opéré dans un four de passage continu.

7. Procédé selon l'une des revendications 1 à 6, caractérisé en ce que le recuit d'homogénéisation est opéré sous gaz protecteur.

8. Procédé selon l'une des revendications 1 à 7, caractérisé en ce que le diamètre du fil métallique à revêtir est compris dans la plage de 0,05 à 0,1 mm.

9. Procédé selon l'une des revendications 1 à 7, caractérisé en ce que le diamètre du fil métallique à revêtir est compris dans la plage de 0,1 à 0,5 mm.

10. Procédé selon la revendication 9, caractérisé en ce que le diamètre du fil métallique est réduit par étirage après le recuit d'homogénéisation.

11. Procédé selon l'une des revendications 1 à 10, caractérisé en ce que le revêtement en métal commun est déposé par galvanisation.

12. Procédé selon l'une des revendications 1 à 11, caractérisé en ce que la séparation du métal commun s'effectue au moyen d'une solution caustique.

13. Treillis catalyseur susceptible d'être obtenu selon le procédé selon l'une des revendications 1 à 12, caractérisé par une surface agrandie par rapport à la surface originelle du fil et formant partie intégrante du fil du treillis.

14. Utilisation du treillis catalyseur selon la revendication 13 pour l'oxydation d'ammoniac.

15. Utilisation du treillis catalyseur selon la revendication 13 pour l'ammoxydation de méthane.
